# EUROPEAN PATENT SPECIFICATION

(11) **EP 2 319 050 B1**
(45) Date of publication and mention of the grant of the patent: **07.10.2015**
(21) Application number: 08788808.7
(22) Date of filing: 25.07.2008
(51) Int. Cl.: G21K 1/06

(54) **NEUTRON GUIDE SYSTEM COMPRISING NEUTRON GUIDE SECTIONS, SUPPORT FOR NEUTRON GUIDE SECTIONS AND METHOD OF ALIGNING NEUTRON GUIDE SECTIONS**
NEUTRONENFÜHRUNGSSYSTEM MIT NEUTRONENFÜHRUNGSTEILEN SOWIE DEREN HALTERUNG UND VERFAHREN ZUM AUSRICHTEN DERSELBEN
SYSTÈME DE GUIDE DE NEUTRONS COMPRENANT DES PARTIES DE GUIDE DE NEUTRONS AINSI QUE LEUR SUPPORT ET PROCÉDÉ DE LEUR ALIGNEMENT

(43) Date of publication of application: 11.05.2011
(73) Proprietor: Mirrotron Kft., 1121 Budapest (HU)
(72) Inventor: MEZEI, Ferenc, H-1026 Budapest (HU); VAMOS, Robert, H-1026 Dunakeszi (HU)
(74) Representative: Kacsuk, Zsófia
(86) International application number: PCT/HU2008/000090
(87) International publication number: WO 2010/010411

(56) References cited:
- DE-A1- 2 062 721
- JP-A- 4 022 899
- JP-A- 4 335 200
- JP-A- 2004 317 429

## Description

The present invention relates to a neutron guide system built from rigid, straight neutron guide sections with two ends, the guide sections being arranged to provide a neutron path, and the guide system having a support structure for supporting the guide sections.

Neutron guide systems are generally made up of aligned neutron guide sections forming a vacuum jacket around a number of adjacent neutron guide elements. One section typically contains three or four neutron guide glass units (neutron reflecting mirrors). When installing the neutron guide system generally the neutron guide sections are placed upon supports, the positions of which are set to create a linear or slightly curved neutron path. Once the desired neutron path is formed, the position of the supports is fixed. Thus the position of each neutron guide section is fixed independently, without any mechanical connection between neighbouring neutron guide sections, except for some kind of flexible vacuum seal, such as bellows or rubber sleeves.

The position of the neutron guide sections needs to be maintained very precisely, otherwise the neutron guide elements of the guide sections could become misaligned relative to the other guide sections and the planned neutron path, leading to neutron beam losses. To avoid the afore-mentioned problems the supports need to have highly stable foundations. However even a very expensive and deep foundation cannot avoid displacements due to earthquakes and other earth (or ground) movements, or the movements of the foundation itself in case of a new building.

Such a prior art neutron guide system is disclosed in Hungarian Patent Application No. P9200565. The guide system comprises rigid neutron guide sections each of which is supported by two supports. The guide sections reach over the supports and the abutting ends of the adjacent guide sections are connected to each other via fully flexible connections (e.g. bellows), which do not constrain the relative positions of neighbouring guide sections. The displacements of the support structure lead to a decreased performance of the neutron guide system by both misalignments of the ends of neighbouring guide sections and changes in the path defined by the guide sections. Realignment of the deteriorated structure is a lengthy and complicated operation, which can imply the dismantling of other structural elements built around the neutron guide system, for example radiation shielding. Other neutron guides are disclosed by DE 2062721, JPH04022899, or JP 2004317429.

It is an object of the present invention to overcome the above-mentioned problems associated with movements of the earth (or ground) or the foundation of the supporting structure of a neutron guide system by providing a support system with flexible connections and supports comprising positioning means.

The above objects are achieved by a neutron guide system according to claim 1.

The invention further relates to a method for aligning neutron guide sections of a neutron guide system according to claim 5.

Further details of the invention will be apparent from the accompanying figures and exemplary embodiments.
Fig. 1 is a perspective view of a first embodiment of a neutron guide system according to the invention.
Fig. 2 is a perspective cross-sectional view of a flexible connection between neighbouring guide sections provided in the neutron guide system of Fig. 1.
Fig. 3 is a perspective view of the supports of the neutron guide system of Fig. 1.
Fig. 4 is a perspective view of neutron guide element.
Fig. 5 is a perspective view of a part of the guide system of Fig. 1 showing an optical reference point in accordance with the invention.
Fig. 6 is a schematic diagram illustrating the misalignment of the guide system in case of displacement of the supports.
Fig. 6b is a schematic diagram illustrating misalignment of a prior art neutron guide system in case of displacement of the supports.
Fig. 7 is a schematic view across the optical reference points.
Fig. 8 is a perspective view of a second embodiment of a neutron guide system according to the invention.
Fig. 9 is an enlarged perspective view of a part of the guide system of Fig. 8.
Fig. 10 is a perspective cross-sectional view of the vertical positioning means of the guide system of Fig. 8.
Fig. 11 is a cross-sectional view of a third embodiment of a neutron guide system according to the invention.

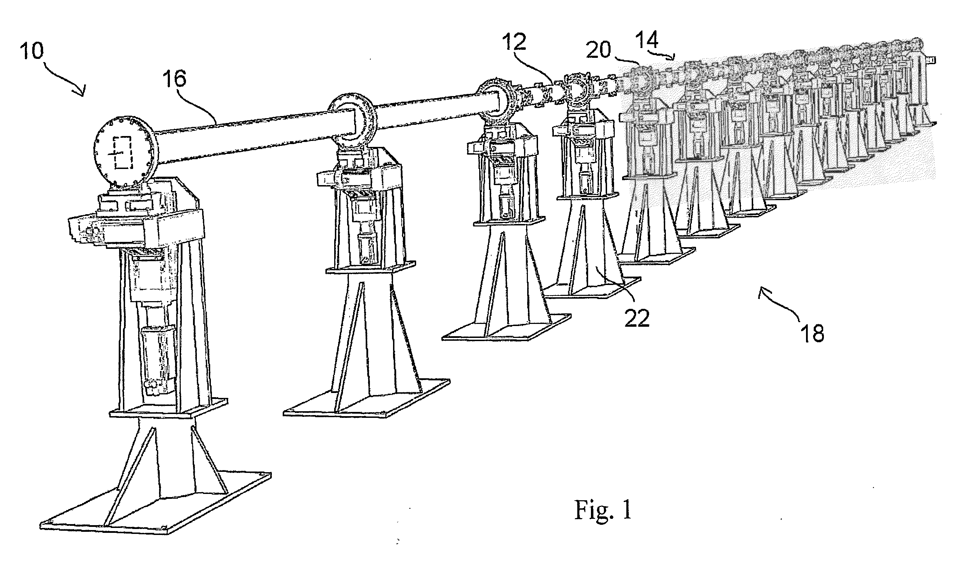

Fig. 1 is a perspective view of a first preferred embodiment of a neutron guide system 10 according to the invention. The guide system 10 comprises neutron guide sections 12 aligned to form a vacuum housing 14, which can be linear or slightly curved e.g. with a radius of curvature of about 1 to 2 km. The vacuum housing 14 may be connected directly to a neutron source beam tube or the neutron guide system 10 may comprise a section of steel collimators 16 as shown in the figure. Both the neutron guide sections 12 and the steel collimators 16 are supported via support structure 18 comprising flexible connecting means 20 flexibly connecting adjacent ends of two adjacent guide sections 12. The support structure 18 further comprises supports 22, which are provided at the adjacent ends of the guide sections 12 and each of them supports both of the adjacent ends of neighbouring guide sections via the connecting means 20.

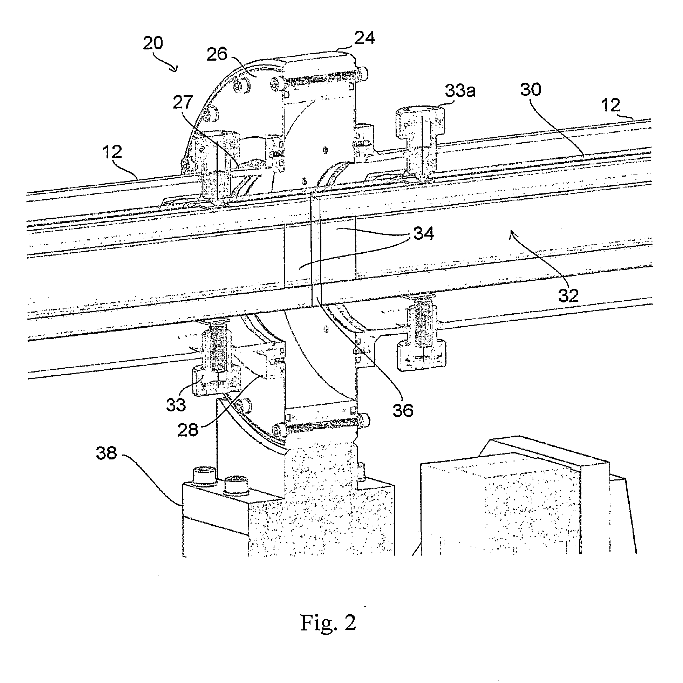

An enlarged perspective cross-sectional view of the flexible connecting means 20 is shown in Fig. 2. According to this embodiment the flexible connecting means 20 comprises a rigid outer ring 24 with flexible ring plates 26 connected thereto and to the guide sections 12 on both sides. The adjacent ends 27 of the neutron guide sections 12 are provided with an outer flange 28, which are joined to the inner rim of the flexible ring plates 26 as shown in the figure. The connections between the outer ring 24, the ring plates 26 and the flanges 28 are vacuum tight, realised e.g. by screw clamped rubber sealing rings.

The flexible connecting means 20 provide for flexible connection between the adjacent ends 27 of two neighbouring guide sections 12. The flexible connection allows for tilting of the guide sections 12 relative to each other, but hinders vertical or horizontal side way displacement of the ends 27 relative to each other.

The neutron guide sections 12 and the flexible connecting means 20 form a vacuum jacket around the neutron guide elements 30 disposed within the neutron guide sections 12. Each neutron guide section 12 may contain more than one neutron guide elements 30, e.g. the neutron guide section 12 can be a 2 m long steel tube containing four, approximately 0.5 m long glass-sandwich guide elements 30 (neutron reflecting mirrors). The neutron guide elements 30 are aligned to form a neutron beam path 32 within the guide sections 12. The neutron beam path 32 may be linear or slightly curved e.g. with a radius of curvature of about 1 to 2 km (in which case the vacuum housing 14 is also curved with a corresponding radius). The position of the neutron guide elements 30 is set via guide adjuster screws 33, which also serve to maintain the guide elements 30 in the desired position. The guide adjuster screws 33 are covered with adjuster screw caps 33a providing a vacuum tight seal around the screws 33.

Adjacent ends of adjacent guide elements 30 within a single guide section 12 are preferably arranged to abut each other, while the adjacent ends 34 of the adjacent guide elements 30 at the connection of two adjacent guide sections 12 are spaced apart from each other in order to allow tilting of the adjacent guide sections 12 relative to each other. A larger spacing 36 allows for greater tilt of the adjacent guide sections 12, however, it also results in a larger scattering of the neutron beam passing from one guide element 30 to the other. Thus the spacing 36 has to be chosen with regard to the amplitude of the expected ground movements as will be explained in more detail later on.

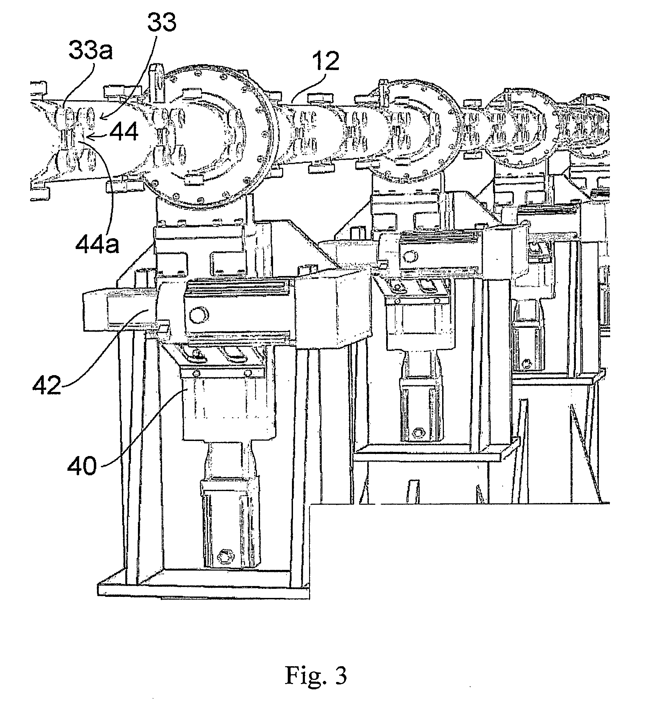

The lower side of the outer ring 24 of the flexible connecting means 20 is supported by support means 38 of the support 22 installed underneath it. The support 22 is provided with vertical positioning means 40 and advantageously with horizontal positioning means 42 as depicted in Fig. 3. Both positioning means 40, 42 may be for example translation drive tables, e.g. stepper motor-driven ball screw tables. The vertical positioning means 40 are provided for adjusting the position of the adjacent ends 27 of the adjacent guide sections 12 along a substantially vertical axis, i.e. lifting and lowering the adjacent ends 27; while the horizontal positioning means 42 are arranged to allow for adjusting the position of the guide sections 12 along a substantially horizontal axis being substantially perpendicular to the guide sections 12, in particular perpendicular to the neutron beam path 32 in the region of the flexible connecting means 20, e.g. in order to set the radius of curvature when installing or realigning a slightly curved vacuum housing 14.

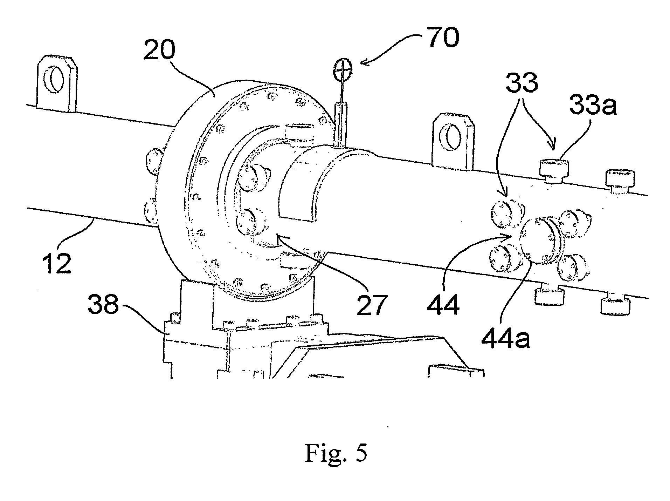

The position of the guide adjusting screws 33 may also be observed in Fig. 5. As it can be seen each neutron guide element 30 is held in place by six screws 33 at both of its ends 34, an upper and a lower screw 33 fixing the vertical position and two screws 33 supporting the ends 34 from both sides. Spy holes 44 are provided between four adjacent side screws 33 of two adjacent guide element 30 ends 34 to facilitate alignment of the neutron guide elements 30 via the adjuster screws 33. Similarly to the adjuster screws 33 the spy holes 44 are also provided with vacuum sealed caps 44a.

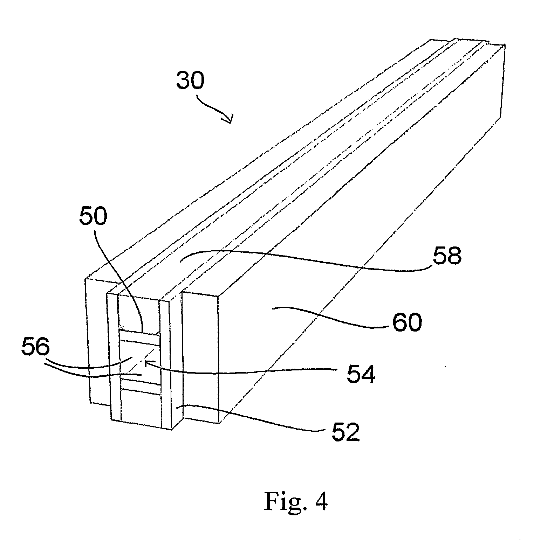

Fig. 4 is a perspective view of a preferred neutron guide element 30, which is an approximately 0.5 m long glass-sandwich guide. The guide element 30 comprises two thin rod glasses 50 (e.g. approx. 3.8 mm thick) and two thin plate glasses 52 (e.g. approx. 3.8 mm) arranged to form an inner substantially rectangular guide tube element 54 with a cross-section e.g. of approximately 15 x 15 mm. The inner rectangular guide tube element 54 is preferably provided with a special neutron reflecting coating 56. Adjoined to the thin glasses 50 and 52 are thick rod glasses 58 (e.g. approx. 15 mm) and thick plate glasses 60 (e.g. approx. 15 mm).

The guide elements 30 are preferably arranged within the guide sections 12 to form a slightly curved neutron beam path 32, this way the inner surface of the inner rectangular guide tube element 54 (i.e. the surface with the smallest radius of curvature) may be provided with a less expensive neutron reflecting coating 56 since the neutron beam passing through the rectangular guide tube element 54 will come into contact with the external surface of the rectangular guide tube element 54 (i.e. the surface with greater radius of curvature) at a greater grazing angle than with the internal side

The neutron guide system 10 is preferably provided with remotely readable position markers. Such position markers can be optical reference points such as the crosshair 70 depicted in Fig. 5. The crosshair 70 or any other optical reference point is preferably arranged in the proximity of the supports 22, e.g. affixed to one of two adjacent ends 27 of two adjacent guide sections 12 connected by a flexible connecting means 20. The remotely readable position markers are not limited to optical reference points but may comprise e.g. any type of electric or ultrasound signal sources the position of which can be detected by appropriate detecting means.

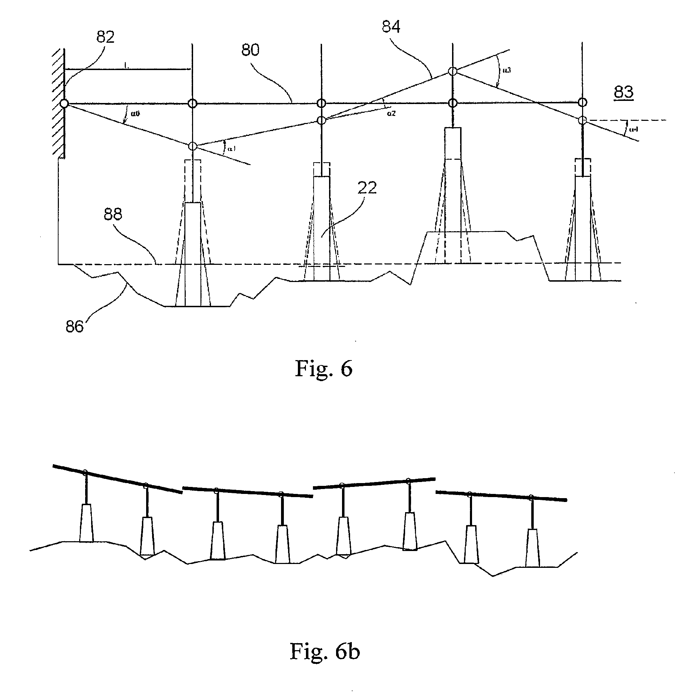

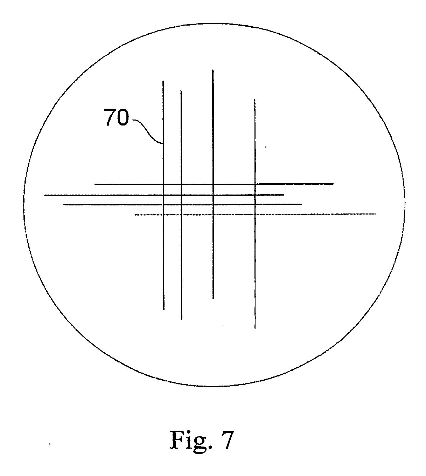

The benefits of the above described inventive neutron guide system 10 and inventive support structure 18 in case of movements of the supporting ground (floor, earth, foundation, etc.) will now be described with reference to schematic Fig. 6 and 7.

Line 80 indicates the position of the vacuum housing 14 as originally installed running linearly and horizontally from a neutron source (reactor side 82) to the sample side of the installation. Angled line 84 corresponds to the line of the vacuum housing 14 after movements of the ground have caused the supports 22 to lift or to sink in accordance with the new ground level 86. The dashed lines indicate the original ground level 88 and the original position of the supports 22.

When the original ground level 88 changes e.g. due to movements of the earth or the foundation of the support system 18, the supports 22 move slightly upwards or downwards and/or sideways (which latter is not visible in the plane of the drawing) causing the guide sections 12 and the neutron guide elements 30 therein to be misaligned. The depicted change between the original and the new ground level 88, 86 is exaggerated to better illustrate the resulting misalignment of the guide sections 12 making up the vacuum housing 14. However, even a displacement in the order of 1-2 mm can cause serious losses of the neutron beam and thus result in decreased performance of the neutron guide system 10 due to deviations of the line of the guide system 10 from the ideal one. On the other hand, with the use of the connecting means 20 between adjacent neutron guide sections in this invention, the ends 27 of the adjacent guide sections move together and remain aligned relative to each other, thus maintaining the relative alignment positions of the adjacent guide section 12 ends 27 relative to each other both in the vertical and horizontal directions substantially perpendicular to the neutron beam direction. In contrast, this is not the case for the prior art guide systems, as shown in Fig. 6b.

Vertical displacement of the supports 22 can be corrected via the vertical positioning means 40 of the supports 22. The adjacent ends 27 of the guide sections 12 are lifted together via the vertical positioning means 40 where the new ground level 86 is lower than the original ground level 88, and lowered where the new ground level 86 is higher than the original ground level 88.

Fig. 7 illustrates a view taken along the crosshairs 70 when the guide sections 12 become misaligned as depicted in Fig. 6. When first installing the guide system 10 the crosshairs 70 could ideally be aligned together with the guide sections 12 thus a view taken along a similar line of sight before movements of the ground would only have shown a single crosshair 70 (in the case of a linear vacuum housing 14) or a plurality of crosshairs 70 vertically aligned but slightly displaced in the horizontal direction (corresponding to a slightly curved vacuum housing 14). However, in practice there is no need to align the crosshairs between themselves relative to each other. It is sufficient to precisely record the position of each of them when the guide system 10 is fully aligned. When the guide sections 12 become vertically misaligned due to movements of the ground only the vertical position of the ends 27 of the guide sections 12 need to be reset via the vertical positioning means 40. The vertical resetting of the guide sections 12 is assisted by the crosshairs 70 serving as optical reference points. The ends 27 of the guide sections 12 are lifted or lowered via the vertical positioning means 40 until each crosshair 70 becomes level, i.e. the horizontal lines of the crosshairs 70 coincide. If needed the horizontal position of the ends 27 of the guide sections 12 may also be reset via the horizontal positioning means 42 of the supports 22 by adjusting the ends 27 of the guide sections 12 to bring the crosshairs 70 to the desired positions relative to each other.

Adjusting the position of the ends 27 of the guide sections 12 via the vertical positioning means 40 and optionally via the horizontal positioning means 42 may be carried out manually or the procedure can be partly or fully automated. E.g. any known optical image capturing device may be used to capture an image of a view through the optical reference points (crosshairs 70) as seen in Fig. 7, from which image the position of the optical reference points can be determined by a computer, which can also be responsible for controlling the actuation of the positioning means 40, 42 for realigning the guide sections 12.

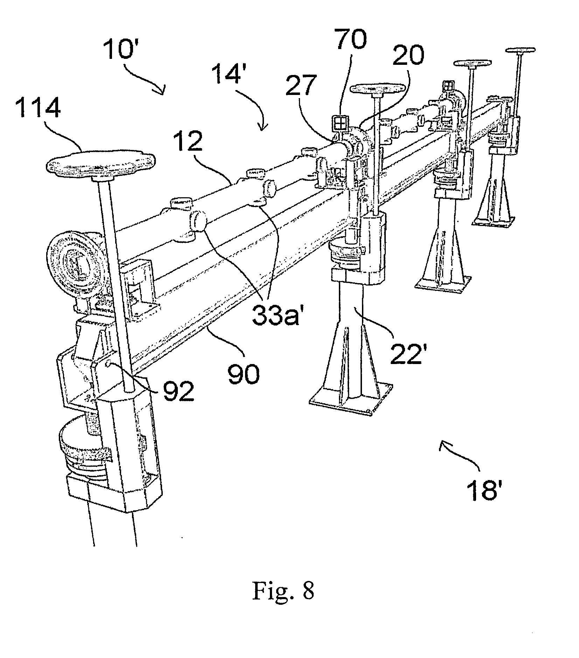

Fig. 8 is a perspective view of a partly installed neutron guide system 10' according to a second preferred embodiment of the invention. For the sake of clarity same components are referred to with the same reference numerals, while similar or corresponding components are referred to with dashed reference numerals.

The guide system 10' comprises neutron guide sections 12 aligned to form a vacuum housing 14, which can be linear or slightly curved e.g. with a radius of curvature of about 1 to 2 km. The neutron guide sections 12 are supported via a support structure 18' comprising flexible connecting means 20 flexibly connecting adjacent ends 27 of two adjacent guide sections 12; supports 22', which are provided at the adjacent ends 27 of the guide sections 12; and further comprising I-section holder bars 90 running underneath the guide sections 12.

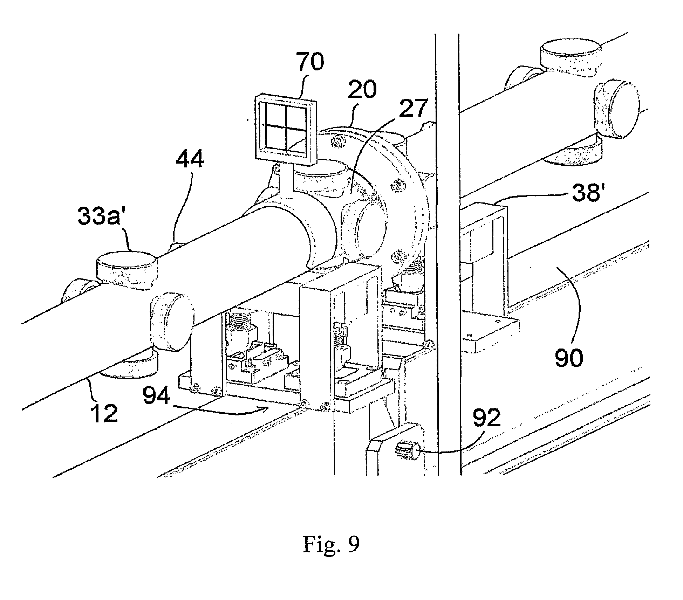

The holder bars 90 are connected to each other by shafts 92 (see Fig. 9), which also serve as the centre of rotation of the holder bars 90 to ensure tilting of the holder bars 90 relative to each other together with the corresponding guide section 12 in case of displacement of the supports 22' as explained in connection with Fig. 6 and 7.

In this embodiment two support means 38' are provided in the proximity of each support 22' at the ends 94 of the holder bars 90. Unlike the first embodiment, here the support means 38' support directly the two adjacent ends 27 of two adjacent guide sections 12 as can be seen in Fig. 9. The guide sections 12 can be adjoined by the same type of flexible connecting means 20 as explained in relation with the first embodiment.

The vacuum tight screw caps 33a' indicated in Fig. 8 and 9 may cover and seal off a plurality of adjuster screws 33 arranged for example as in the first embodiment in order to keep the neutron guide elements 30 in place. Spy holes 44 are provided along the guide sections 12 corresponding to separate guide elements 30 in order to allow alignment of the guide elements 30.

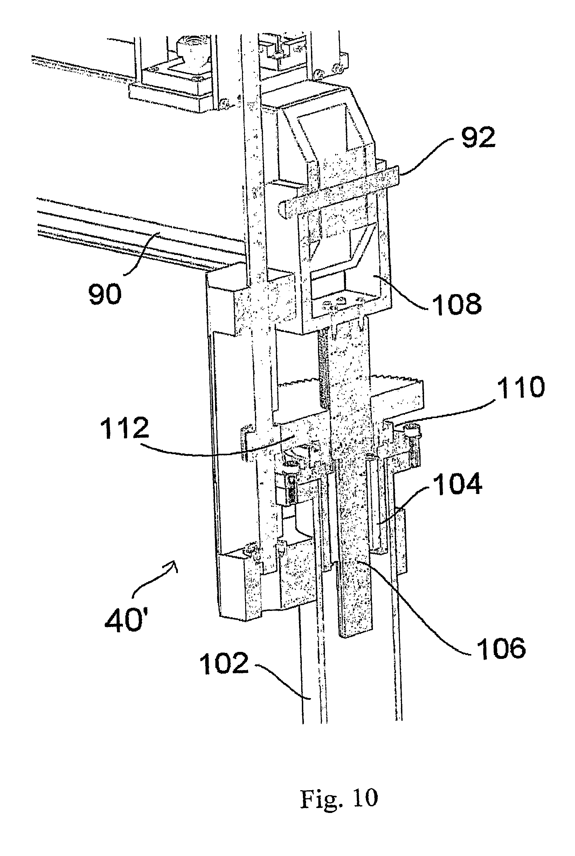

The support 22' of the second embodiment comprises a hollow base column 102 with linear bushing 104 therein for cooperation with an adjuster shaft 106 of a vertical positioning means 40' of the support 22 (see Fig. 10). A holder fork 108 is connected to the upper end of the adjuster shaft 106, and the shaft 92 connecting the adjacent ends 94 of the adjacent holder bars 90 is held in the holder fork 108. The vertical positioning means 40' further comprises a bearing 110 of the adjuster shaft 106 and a gear-drive 112 which can be operated via an adjuster wheel 114 shown in Fig. 8. Inside the gear-drive 112 there is a trapezoidal thread connecting it to the adjuster shaft 106.

When vertical adjustment is needed the adjuster wheel 114 is rotated, which in turn rotates the gear-drive 112. The rotation of the gear-drive 112 is transferred to the adjuster shaft 106 via the threaded connection between the gear-drive 112 and the adjuster shaft 106, making the adjuster shaft move vertically (up- or downwards) in the linear bushing 104. Thereby the holder fork 108 with the shaft 92 is also displaced vertically lifting or lowering the ends 94 of the holder bars 90, which in turn cause the vertical displacement of the adjacent ends 27 of the guide sections 12 via the support means 38'.

Adjustment of the misaligned neutron guide system 10' using optical reference points (crosshairs 70) may be carried out as described above with reference to Fig. 6 and 7, the only difference being that this embodiment does not provide for horizontal adjustment.

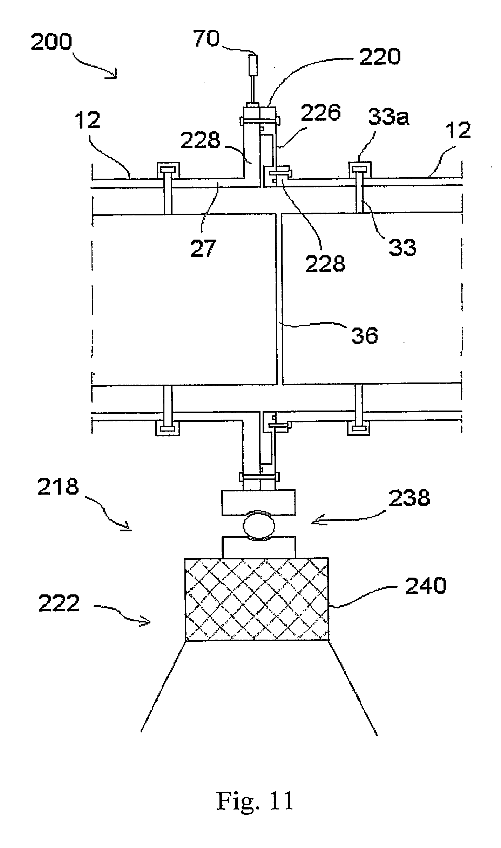

Fig. 11 illustrates a third embodiment of the neutron guide system 200 with a different support structure 218. Again, same components are referred to by the same reference numerals, while similar or corresponding components are referred to by corresponding numerals starting with two hundred.

The flexible connecting means 220 of the third embodiment comprises a single ring plate 226, having a thinner flexible inner portion and thicker inner and outer rims, which are connected to asymmetric flanges 228 of two adjacent guide sections 12 as shown in Fig. 11. Thus the flexible connection between two adjacent ends 27 of two adjacent guide sections 12 is realised with a connecting means 220 providing for a flexible connection only for one of the adjacent ends 27 (in this embodiment towards the end 27 with the smaller flange), the other adjacent end 27 being rigidly connected to the outer rim of the ring plate 226 and being directly supported on support means 238. The support means 238 preferably includes one or more pivotal bearings to further assist tilting of the guide sections 12 in case of displacement of the support 220 for example due to movements of the ground.

The support 222 comprises positioning means 240 for adjusting the position of the adjacent ends 27 of the adjacent guide sections 12 along a substantially vertical axis and optionally along a substantially horizontal axis being substantially perpendicular to the neutron path 32 in the region of the flexible connecting means 220.

In the embodiment depicted in Fig. 11 the optical reference point (crosshair 70) is attached to the wider flange 228 of one of the two adjacent ends 27 of the adjacent guide sections 12.

Adjusting the position of the adjacent ends 27 via the support structure 218 is carried out as explained in connection with Fig. 6 and 7.

The above-described embodiments are intended only as illustrating examples and are not to be considered as limiting the invention. Various modifications will be apparent to a person skilled in the art without departing from the scope of protection determined by the attached claims.

## Claims

1. Neutron guide system (10) having neutron guide sections (12) with two ends (27), and having one or more neutron guide elements (30) contained within each neutron guide section (12), the neutron guide elements (30) being aligned to form a neutron path (32) within the guide sections (12), and the guide system (10) having a support structure (18) for supporting the guide sections (12), which support structure (18) comprises:
- flexible connecting means (20) flexibly connecting the adjacent ends (27) of two adjacent guide sections (12) along the neutron path (32) the flexible connecting means (20) allows tilting of the guide sections (12) relative to each other and maintains the positions of the adjacent ends (27) of the guide sections (12) relative to each other in directions substantially perpendicular to the neutron path (32),
- supports (22) provided at the adjacent ends (27) of the guide sections (12);
and the flexible connecting means (20) and the guide sections (12) are arranged such as to form a vacuum jacket around the neutron guide elements (30), **characterised in that** the supports (22) comprise positioning means (40) arranged for adjusting the position of the adjacent ends (27) along at least a substantially vertical axis by lifting and lowering the adjacent ends (27).

2. The neutron guide system according to claim 1, wherein the supports (22) further comprise positioning means (42) arranged for adjusting the position of the adjacent ends (27) of the guide sections (12) along a substantially horizontal axis being substantially perpendicular to the neutron path in the region of the flexible connecting means (20) and wherein the positioning means (40, 42) comprise a translation drive table.

3. The neutron guide system according to claims 1 or 2, comprising remotely readable position markers - preferably optical reference points, more preferably crosshairs (70), arranged in the proximity of the supports (22) - arranged for aligning or checking the position of the ends (27) of the guide sections (12).

4. The neutron guide system according to any of claims 1 to 3, wherein each neutron guide element (30) has two ends (34) and the ends (34) of the guide elements (30) at the connection of two adjacent guide sections (12) are spaced apart from each other.

5. Method for aligning neutron guide sections (12) of a neutron guide system (10), the neutron guide sections (12) having two ends (27), one or more neutron guide elements (30) being arranged within each neutron guide section (12), the neutron guide elements (30) being aligned to form a neutron path (32), and the guide system (10) having a support structure (18) for supporting the guide sections (12), the method comprising:
- providing flexible connections between the ends (27) of two adjacent guide sections (12) along the neutron path (32) for allowing tilting of the attached guide sections (12) relative to each other and maintaining the positions of the adjacent ends of the guide sections (12) relative to each other in directions substantially perpendicular to the neutron path,
- arranging the flexible connecting means (20) and the guide sections (12) such as to form a vacuum jacket around the neutron guide elements (30),
- providing supports (22) for supporting the adjacent ends (27) of the guide sections (12),
**characterised by** the steps of:
- providing the supports (22) with positioning means (40) for adjusting the position of the adjacent ends (27) along at least a substantially vertical axis by lifting and lowering the adjacent ends (27),
- aligning the neutron guide sections (12) by adjusting the position of the adjacent ends (27) relative to the supports (22) via the positioning means (40) by lifting and lowering the adjacent ends (27) in order to obtain a desired neutron path (32).

6. The method according to claim 5, comprising providing remotely readable position markers, preferably optical reference points, in the proximity of the supports (22) and using the position markers to record the alignment of the guide section (12) positions and preferably to control or reproduce or realign the guide section (12) positions.

## Patentansprüche

1. Neutronenführungssystem (10), das Neutronenführungsabschnitte (12) mit zwei Enden (27) hat, und ein oder mehrere Neutronenführungselemente (30) hat, die innerhalb von jedem Neutronenführungsabschnitt (12) enthalten sind, wobei die Neutronenführungselemente (30) so ausgerichtet sind, dass sie einen Neutronenpfad (32) innerhalb der Führungsabschnitte (12) bilden, und wobei das Führungssystem (10) eine Trägerstruktur (18) zum Tragen der Führungsabschnitte (12) hat, wobei die Trägerstruktur (18) umfasst:
- ein flexibles Verbindungsmittel (20), das die benachbarten Enden (27) von zwei benachbarten Führungsabschnitten (12) entlang des Neutronenpfads (32) flexibel verbindet, wobei das flexiblen Verbindungsmittel (20) ein Kippen der Führungsabschnitte (12) relativ zueinander ermöglicht und die Positionen der benachbarten Enden (27) der Führungsabschnitte (12) relativ zueinander in Richtungen im wesentlichen senkrecht zu dem Neutronenpfad (32) beibehält,
- Stützen (22), die an den benachbarten Enden (27) der Führungsabschnitte (12) vorgesehen sind;
und wobei das flexible Verbindungsmittel (20) und die Führungsabschnitte (12) so angeordnet sind, dass sie einen Vakuummantel um die Neutronenführungselemente (30) bilden, **dadurch gekennzeichnet, dass** die Träger (22) Positionierungsmittel (40) umfassen, die eingerichtet sind, die Position der benachbarten Enden (27) entlang mindestens einer im wesentlichen vertikalen Achse durch Anheben und Absenken der benachbarten Enden (27) anzupassen.

2. Neutronenführungssystem nach Anspruch 1, wobei die Träger (22) ferner Positionierungsmittel (42) umfassen, die eingerichtet sind, die Position der benachbarten Enden (27) der Führungsabschnitte (12) entlang eine im Wesentlichen horizontale Achse im Wesentlichen senkrecht zu dem Neutronenpfad in dem Bereich des flexiblen Verbindungsmittels (20) anzupassen, und wobei die Positionierungsmittel (40, 42) einen Übersetzungsantriebstisch umfassen.

3. Neutronenführungssystem nach den Ansprüchen 1 oder 2, das aus der Ferne lesbare Positionsmarker - vorzugsweise optische Bezugspunkte, insbesondere Fadenkreuze (70) umfasst, die in der Nähe der Träger (22) angeordnet sind - die eingerichtet sind, die Position der Enden (27) der Führungsabschnitte (12) auszurichten bzw. zu überprüfen.

4. Neutronenführungssystem nach einem der Ansprüche 1 bis 3, wobei jedes Neutronenführungselement (30) zwei Enden (34) hat, und wobei die Enden (34) der Führungselemente (30) an der Verbindung von zwei benachbarten Führungsabschnitten (12) voneinander beabstandet sind.

5. Verfahren zum Ausrichten von Neutronenführungsabschnitten (12) eines Neutronenführungssystem (10), wobei die Neutronenführungsabschnitte (12) zwei Enden (27) haben, wobei eine oder mehrere Neutronenführungselemente (30) innerhalb eines jeden Neutronenführungsabschnitts (12) angeordnet sind, wobei die Neutronenführungselemente (30) so ausgerichtet sind, dass sie einen Neutronenpfad (32) bilden, und wobei das Führungssystem (10) eine Trägerstruktur (18) zum Tragen der Führungsabschnitte (12) hat, wobei das Verfahren umfasst:
- Bereitstellen von flexiblen Verbindungen zwischen den Enden (27) von zwei benachbarten Führungsabschnitten (12) entlang des Neutronenpfads (32), um ein Kippen der verbundenen Führungsabschnitte (12) relativ zueinander zu ermöglichen und die Positionen der benachbarten Enden der Führungsabschnitte (12) relativ zueinander in Richtungen im Wesentlichen senkrecht zu dem Neutronenpfad beizubehalten,
- Anordnen der flexiblen Verbindungsmittel (20) und der Führungsabschnitte (12), um so einen Vakuummantel um die Neutronenführungselemente (30) zu bilden,
- Bereitstellen von Trägern (22) zum Tragen der benachbarten Enden (27) der Führungsabschnitte (12),
**gekennzeichnet durch** die Schritte:
- Bereitstellen der Träger (22) mit Positionierungsmitteln (40) zum Anpassen der Position der benachbarten Enden (27) entlang mindestens einer im wesentlichen vertikalen Achse **durch** das Anheben und Absenken der benachbarten Enden (27),
- Ausrichten der Neutronenführungsabschnitte (12) **durch** Anpassen der Position der benachbarten Enden (27) relativ zu den Trägern (22) über die Positionierungsmittel (40) **durch** Anheben und Absenken der benachbarten Enden (27), um einen gewünschten Neutronenpfad (32) zu erhalten.

6. Verfahren nach Anspruch 5, umfassend das Bereitstellen fernauslesbarer Positionsmarker, vorzugsweise optischer Bezugspunkte, in der Nähe der Träger (22), und Verwenden der Positionsmarker zum Aufzeichnen der Ausrichtung der Positionen des Führungsabschnitts (12) und vorzugsweise zum Steuern oder zum Vervielfältigen oder zum Neuausrichten der Positionen des Führungsabschnitts (12).

## Revendications

1. Système de guidage de neutrons (10) ayant des sections de guidage de neutrons (12) avec deux extrémités (27), et ayant un ou plusieurs éléments de guidage de neutrons (30) contenus dans chaque section de guidage de neutrons (12), les éléments de guidage de neutrons (30) étant alignés pour former un trajet de neutrons (32) dans les sections de guidage (12) et le système de guidage (10) ayant une structure de support (18) pour supporter les sections de guidage (12), ladite structure de support (18) comprenant :
- des moyens de connexion flexibles (20) pour connecter de manière flexible les extrémités adjacentes (27) de deux sections de guidage adjacentes (12) le long du trajet de neutrons (32), les moyens de connexion flexibles (20) permettant de faire basculer les sections de guidage (12) l'une par rapport à l'autre et maintiennent les positions des extrémités adjacentes (27) des sections de guidage (12) l'une par rapport à l'autre dans des directions sensiblement perpendiculaires au trajet de neutrons (32),
- des supports (22) ménagés aux extrémités adjacentes (27) des sections de guidage (12) ; et
les moyens de connexion flexibles (20) et les sections de guidage (12) sont aménagés pour former une chemise de vide autour des éléments de guidage de neutrons (30), **caractérisé en ce que** les supports (22) comprennent des moyens de positionnement (40) aménagés pour ajuster la position des extrémités adjacentes (27) le long d'au moins un axe sensiblement vertical en soulevant et en abaissant les extrémités adjacentes (27).

2. Système de guidage de neutrons selon la revendication 1, dans lequel les supports (22) comprennent en outre des moyens de positionnement (42) aménagés pour ajuster la position des extrémités adjacentes (27) des sections de guidage (12) le long d'un axe sensiblement horizontal qui est sensiblement perpendiculaire au trajet des neutrons dans la région des moyens de connexion flexibles (20) et dans lequel les moyens de positionnement (40, 42) comprennent une table d'entraînement en translation.

3. Système de guidage de neutrons selon la revendication 1 ou la revendication 2, comprenant des repères de position lisibles à distance - de préférence des points de référence optiques, mieux encore des réticules (70) disposés à proximité des supports (22) - aménagés pour aligner ou contrôler la position des extrémités (27) des sections de guidage (12).

4. Système de guidage de neutrons selon l'une quelconque des revendications 1 à 3, dans lequel chaque élément de guidage de neutrons (30) a deux extrémités (34) et les extrémités (34) des éléments de guidage (30) au niveau de la connexion de deux sections de guidage adjacentes (12) sont espacées l'une de l'autre.

5. Procédé d'alignement de sections de guidage de neutrons (12) d'un système de guidage de neutrons (10), les sections de guidage de neutrons (12) ayant deux extrémités (27), un ou plusieurs éléments de guidage à neutrons (30) étant aménagés dans chaque section de guidage de neutrons (12), les éléments de guidage de neutrons (30) étant alignés pour former un trajet de neutrons (32) et le système de guidage (10) ayant une structure de support (18) pour supporter les sections de guidage (12), le procédé comprenant les étapes consistant à :
- fournir des connexions flexibles entre les extrémités (27) de deux sections de guidage adjacentes (12) le long du trajet de neutrons (32) pour permettre de basculer les sections de guidage fixées (12) l'une par rapport à l'autre et maintenir les positions des extrémités adjacentes des sections de guidage (12) l'une par rapport à l'autre dans des directions sensiblement perpendiculaires au trajet des neutrons,
- aménager les moyens de connexions flexibles (20) et les sections de guidage (12) de manière à former une chemise de vide autour des éléments de guidage de neutrons (30),
- fournir de supports (22) pour supporter les extrémités adjacentes (27) des sections de guidage (12),
**caractérisé par** les étapes consistant à :
- pourvoir les supports (22) de moyens de positionnement (40) pour ajuster la position des extrémités adjacentes (27) le long d'au moins un axe sensiblement vertical par soulèvement et abaissement des extrémités adjacentes (27), et
- aligner les sections de guidage de neutrons (12) en ajustant la position des extrémités adjacentes (27) par rapport aux supports (22) via les moyens de positionnement (40) en soulevant et en abaissant les extrémités adjacentes (27) pour obtenir un trajet de neutrons souhaité (32).

6. Procédé selon la revendication 5, comprenant la fourniture de repères de positions lisibles à distance, de préférence des points de référence optiques, à proximité des supports (22) et l'utilisation des repères de position pour enregistrer l'alignement des positions des sections de guidage (12) et, de préférence, pour commander ou reproduire ou réaligner les positions des sections de guidage (12).
